# EUROPÄISCHE PATENTSCHRIFT

(11) **EP 2 394 859 B1**
(45) Veröffentlichungstag und Bekanntmachung des Hinweises auf die Patenterteilung: **18.09.2013**
(21) Anmeldenummer: 11004572.1
(22) Anmeldetag: 06.06.2011
(51) Int. Cl.: B60R 13/00, B60R 19/02, F16B 5/06

(54) **Verkleiderungsanordnung für ein Kraftfahrzeug**
Cladding assembly for a motor vehicle
Agencement d'habillage pour un véhicule automobile

(30) Priorität: 09.06.2010 DE 202010007764 U
(43) Veröffentlichungstag der Anmeldung: 14.12.2011
(73) Patentinhaber: Rehau AG + Co, 95111 Rehau (DE)
(72) Erfinder: Uhlig, Nico, 08529 Plauen (DE)

(56) Entgegenhaltungen:
- EP-A1- 0 761 984
- EP-A1- 1 067 025
- DE-A1-102005 021 895
- FR-A1- 2 921 609

## Beschreibung

Die vorliegende Erfindung betrifft eine Verkleidungsanordnung, insbesondere für ein Kraftfahrzeug, nach dem Oberbegriff des Patentanspruchs 1.

Bei großflächigen und im Wesentlichen dünnwandigen Außenanbauteilen aus Kunststoff ist es in der Regel erforderlich, dass die Struktur des Außenanbauteils durch ein verstärkendes Innenteil gestützt ist. Bei Kunststoffbauteilen tritt zudem das Problem auf, dass es bei einer Materialanhäufung zu Einfallstellen innerhalb des Bauteils kommen kann, sodass eine sichtbare Fläche des Au ßenanbauteils (Designfläche) negativ beeinflusst wird. Das Vorsehen von Verbindungsmitteln hinter der Designfläche, also das Verbinden des Außenanbauteils und des Innenteils über Verbindungsmittel im Bereich der Innenfläche des Außenanbauteils, schließt sich aus dem vorgenannten Grund daher aus. Im Stand der Technik ist daher bekannt, die erforderliche Verbindung des Außenanbauteils und des Innenteils im Randbereich bzw. am Teilende des Außenanbauteils zu realisieren. Aus dem Stand der Technik sind hierfür Verrastungen bekannt, bei welchen der Rasthaken an der Verkleidung derart integriert ist, dass im Verbindungsbereich aufgrund des begrenzten Bauraumes eine Wanddickenerhöhung auf der Innenseite des Außenanbauteils erforderlich ist. Eine derartige Verbindungsanordnung ist aus der EP 0 761 984 A1 bekannt. Nachteilig an dem Verbindungskonzept des Stands der Technik ist, dass eine Wanddickenerhöhung in der Regel nicht möglich ist, sodass die Rastverbindung in eine Rastaufnahme eingreift, deren Materialstärke der Wandstärke des Außenanbauteils entspricht. Das Vorsehen einer gegenüber der Wandstärke erhöhten Materialstärke der Rastaufnahme ist demgegenüber nicht möglich, da diese ansonsten über die Fläche des Außenanbauteils überstehen, und damit von außen sichtbar wäre. Aufgrund der geringen Materialstärke des Rastaufnahmeelements kommt es bei einer einwirkenden Kraft, insbesondere bei einem Unfall, zu einem Versagen der Rastverbindung, sodass sich Außenanbauteil und Innenteil relativ leicht voneinander lösen können.

Eine gattungsgemäße Verkleidungsanordnung kann der DE 10 2005 021 895 A1 entnommen werden. Nachteilig an dieser Verkleidungsanordnung ist, dass die Verbindungsmittelpaare so ausgebildet sind, dass diese im verbundenen Zustand über die Fläche des Außenanbauteils überstehen und entsprechend mittels eines Zierkanals konstruktiv verdeckt werden müssen.

Entsprechend nachteilige Lösungen sind ebenfalls aus der FR 2 921 609 A1 und der EP 1 067 025 A1 bekannt.

Die Erfindung stellt sich daher die Aufgabe, eine Verkleidungsanordnung mit den eingangs beschriebenen Merkmalen anzugeben, die gegenüber dem Stand der Technik eine verbesserte Verbindungsfestigkeit zwischen Außenanbauteil und Innenteil aufweist, ohne dabei den ästhetischen Eindruck der Verkleidungsanordnung negativ zu beeinflussen.

Erfindungsgemäß wird diese Aufgabe dadurch gelöst, dass die Wandstärke der Ausformung und die Wandstärke des die Ausformung umgreifenden oder umschließenden Bereiches der Ausformungsaufnahme so aufeinander abgestimmt sind, dass die Wandstärken im verbundenen Zustand zusammengenommen maximal so groß sind wie die Wandstärke des Außenanbauteils im Bereich der Verbindungsmittel.. Durch die funktionelle Trennung der beiden Verbindungsmittelpaare ist es möglich, zum einen aufgrund des freiwerdenden Bauraumes die Verbindungsmittelpaare jeweils mit einer größeren Materialstärke auszulegen, als dies im Vergleich zum aus dem Stand der Technik bekannten Verbindungsmitteln möglich ist. Zum anderen kann durch das Vorsehen von mehr als einem funktionell eigenständigen Verbindungsmittelpaar die Verbindungsfestigkeit zwischen Außenanbauteil und dem verstärkendem Innenteil wesentlich erhöht werden. Vorteilhafterweise sind die Wandstärken so aufeinander abgestimmt, dass im Verbindungszustand von Außenanbauteil und Innenteil die Wandstärken in Addition nicht soweit aufbauen, dass diese die Wandstärke des Außenanbauteils übersteigen und infolgedessen über die Sichtseite des Außenanbauteils vorstehen würden.

Die Ausformung ist vorzugsweise an dem Außenanbauteil angeordnet. Die Ausformungsaufnahme ist entsprechend vorzugsweise an dem Innenteil angeordnet. Aufgrund der Dünnwandigkeit des Außenanbauteils ist die Ausformung dort einfacher anordenbar als die im Vergleich zur Ausformung höher oder größer aufbauende Ausformungsaufnahme. Weiter vorzugsweise sind die Ausformung an dem Außenanbauteil und/oder die Ausformungsaufnahme an dem Innenteil einstückig angeformt.

Die Wandstärken der Ausformung und des die Ausformung umgreifenden oder umschließenden Bereichs der Ausformungsaufnahme sind so aufeinander abgestimmt, dass die Wandstärken im verbundenen Zustand vom Innenteil und Außenanbauteil zusammen genommen maximal so groß sind wie die Wandstärke des Außenanbauteils im Bereich der Verbindungsmittel. Die Ausformung und der die Ausformung umgreifende oder umschließende Bereich der Ausformungsaufnahme können sich verändernde, insbesondere gestufte Wandstärken aufweisen. Vorzugsweise sind die Wandstärken der Ausformung und des die Ausformung umgreifenden oder umschließenden Bereichs der Ausformungsaufnahme daher so aufeinander abgestimmt, dass im Verbindungszustand von Außenanbauteil und Innenteil die Wandstärken in Addition nicht soweit aufbauen, dass diese die Wandstärke des Außenanbauteils übersteigen und infolgedessen über die Sichtseite des Außenanbauteils vorstehen würden.

Die Ausformung kann zylinderförmig oder pyramidenförmig oder kegelförmig oder rechteckig ausgebildet sein. Auch Kombinationen der vorgenannten Geometrien sind dabei denkbar. Bevorzugt weist die Ausformung eine im Wesentlichen flächige Struktur auf.

Die Ausformung kann eine zum freien Ende hin verjüngende Wandstärke aufweisen. Die Ausformung kann ferner einen zum freien Ende hin verjüngenden Querschnitt aufweisen. Weiterhin im Rahmen der Erfindung ist, dass die Ausformung einen zum freien Ende hin verjüngenden Durchmesser aufweisen kann. In vorteilhafter Weise ergibt sich durch das zum freien Ende hin verjüngende Ende der Ausformung eine Zentrierwirkung für den Zusammenbau von Außenanbauteil und Innenteil, d.h., dass ein leichter Versatz der Verbindungsmittel beim Zusammenbau durch die Geometrie der Ausformung ausgeglichen wird. Ferner wird das Außenanbauteil vorzugsweise in einem Spritzgussverfahren hergestellt, sodass die sich zum freien Ende hin verjüngende Geometrie der Ausformung sich aus dem Spritzgusswerkzeug zudem leichter entformen lässt.

Die Ausformungsaufnahme und/oder die Hakenelementaufnahme können bügelförmig oder bogenförmig oder buchsenförmig oder laschenförmig oder L-förmig oder C-förmig ausgebildet sein. Insbesondere eine laschenförmige Ausbildung von Ausformungsaufnahme und Hakenelementaufnahme haben sich für die Umsetzung der erfindungsgemäßen Lehre als besonders geeignet erwiesen.

Die Verkleidungsanordnung kann mindestens zwei der zweiten Verbindungsmittelpaare vorsehen, wobei das erste Verbindungsmittelpaar zwischen den zweiten Verbindungsmittelpaaren angeordnet ist. Aufgrund dessen, dass die mechanische Belastung primär über das zweite Verbindungsmittelpaar übertragen wird, kann durch das Vorsehen von mindestens zwei zweiten Verbindungsmittelpaaren in vorteilhafter Weise die Verbindungsfestigkeit zwischen Außenanbauteil und Innenteil weiter verbessert und erhöht werden. Vorteilhaft sind eine Vielzahl von Verbindungsmittelpaaren über die gesamte Längserstreckung von Außenanbauteil und Innenteil angeordnet.

Das Hakenelement kann ein Aufgleitelement aufweisen. Das Aufgleitelement erleichtert bei dem Zusammenbau von Außenanbauteil und Innenteil die Montage, indem das Aufgleitelement die Hakenelementaufnahme zunächst im Wesentlichen senkrecht zur Montagerichtung mittels einer elastischen Verformung der Hakenelementaufnahme verdrängt, sodass das Hakenelement bis zu dem Verrasten des Hakenelements in der Hakenelementaufnahme die Montage nicht behindern kann.

Das Außenanbauteil kann aus einem thermoplastischen Kunststoff oder einer Kunststofflegierung bestehen. Vorzugsweise besteht das Außenanbauteil aus Polypropylen mit Ethylen-Propylen-Dien-Kautschuk und Beimengungen von Talkum.

Das Außenanbauteil kann eine Wandstärke im Bereich 2,0 mm bis 4,00 mm, vorzugsweise von 2,5 mm bis 3,5 mm, bevorzugt von 2,8 mm bis 3,2 mm aufweisen. Aufgrund der erfindungsgemäßen Verkleidungsanordnung kann die Wandstärke des Außenanbauteils auf einen vergleichsweise geringen Wert reduziert werden. Dies ermöglicht eine Gewichtsreduzierung des Außenanbauteils gegenüber herkömmlichen Außenanbauteilen.

Das Außenanbauteil kann eine Stoßfängerverkleidung oder eine Kotflügelverkleidung sein.

Die Erfindung umfasst ebenfalls ein Kraftfahrzeug mit einer Verkleidungsanordnung nach einem der Ansprüche 1 bis 10.

### Ausführungsbeispiele

Im Folgenden wird die Erfindung anhand von lediglich Ausführungsbeispiele darstellenden Zeichnungen erläutert. Es zeigen schematisch:
- Fig. 1: eine Übersichtsdarstellung einer erfindungsgemäßen Verkleidungsanordnung,
- Fig. 2: eine Detailansicht einer erfindungsgemäßen Verkleidungsanordnung,
- Fig. 3: eine weitere Detailansicht einer erfindungsgemäßen Verkleidungsanordnung,
- Fig. 4: eine Unteransicht der in Fig. 3 dargestellten Detailansicht,
- Fig. 5: ein Außenanbauteil einer erfindungsgemäßen Verkleidungsanordnung,
- Fig. 6: ein Innenteil einer erfindungsgemäßen Verkleidungsanordnung,
- Fig. 7: ein Außenanbauteil und ein Innenteil während des Zusammenbaus der erfindungsgemäßen Verkleidungsanordnung.

In den Figuren werden gleiche oder funktionsgleiche Elemente mit den gleichen Bezugszeichen versehen.

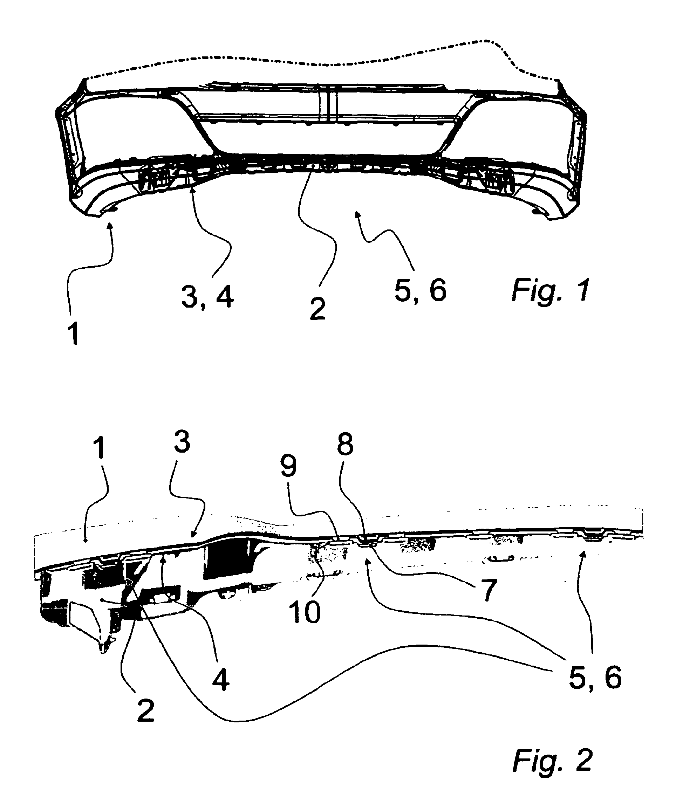

Die Figur 1 zeigt eine Übersichtsdarstellung einer erfindungsgemäßen Verkleidungsanordnung für ein Kraftfahrzeug in einer Innenansicht, d.h. in der der späteren Sichtfläche des Fahrzeugs gegenüberliegender Sichtseite. Die Verkleidungsanordnung weist ein im Wesentlichen dünnwandiges Außenanbauteil 1 aus Kunststoff auf, welches in diesem Fall eine Stoßfängerverkleidung 1 bildet. Ferner weist die Verkleidungsanordnung ein die Struktur des Außenanbauteils 1 verstärkendes Innenteil 2 auf. Das Außenanbauteil 1 und das Innenteil 2 weisen an ihren Randbereichen 3, 4 jeweils mindestens einen Verbindungsbereich 5, 6 mit angeformten Verbindungsmitteln 7, 8, 9, 10 (hier nicht im Detail dargestellt) auf. Mittels der Verbindungsmittel 7, 8, 9, 10 sind das Außenanbauteil 1 und das Innenteil 2 miteinander verbindbar.

Die Figur 2 zeigt eine Detailübersicht von Außenanbauteil 1 und dem das Außenanbauteil 1 verstärkenden Innenteil 2, wobei die Ansicht einen Bereich darstellt, der bei der Montage des Außenanbauteils an dem Fahrzeug die innenliegende Unteransicht des Außenanbauteils 1 bzw. des verstärkenden Innenteils 2 darstellt. Die Verkleidungsanordnung weist ein erstes Verbindungsmittelpaar 7, 8 auf bestehend aus einem Hakenelement 7 und einer dazu korrespondierenden Hakenelementaufnahme 8. Ein zweites, funktionell eigenständiges Verbindungsmittelpaar 9, 10 besteht aus einer Ausformung 9 und einer dazu korrespondierenden Ausformungsaufnahme 10. Die Ausformungsaufnahme 10 ist so ausgebildet, dass im verbundenen Zustand von Außenanbauteil 1 und Innenteil 2 die Ausformung 9 von der Ausformungsaufnahme 10 zumindest bereichsweise umgriffen oder umschlossen ist. Die Verbindungsmittel 7, 8, 9, 10 sind so aufeinander abgestimmt, dass das Hakenelement 7 mit der Hakenelementaufnahme 8 verrastend verbindbar ist, sobald die die Ausformung 9 umgreifende oder umschließende Ausformungsaufnahme 10 an dem Bauteil anliegt, an dem die Ausformung 9 angeordnet ist - in diesem Ausführungsbeispiel ist dies das Außenanbauteil 1. Die Ausformung 9 an dem Außenanbauteil 1 und die Ausformungsaufnahme 10 an dem Innenteil 2 sind einstückig angeformt. Die Ausformungsaufnahme 10 und die Hakenelementaufnahme 8 sind laschenförmig ausgebildet. Im Rahmen der Erfindung ist es ebenfalls denkbar, die Ausformungsaufnahme 10 und/oder die Hakenelementaufnahme 8 bügelförmig oder bogenförmig oder buchsenförmig oder L-förmig oder C-förmig auszubilden. Das Ausführungsbeispiel zeigt mindestens zwei zweite Verbindungsmittelpaare 9, 10, wobei das erste Verbindungsmittelpaar 7, 8 zwischen den zweiten Verbindungsmittelpaaren 9, 10 angeordnet ist. Das Außenanbauteil 1 besteht aus einem thermoplastischen Kunststoff bzw. einer Kunststofflegierung aus Polypropylen mit Ethylen-Propylen-Dien-Kautschuk und Beimengungen von Talkum. Das Außenanbauteil 1 weist eine Wandstärke im Bereich von 2,0 mm bis 4,0 mm, vorzugsweise von 2,5 mm bis 3,5 mm, bevorzugt von 2,8 mm bis 3,2 mm auf. Im Rahmen der Erfindung kann das Außenanbauteil 1 auch eine Kotflügelverkleidung 1 sein.

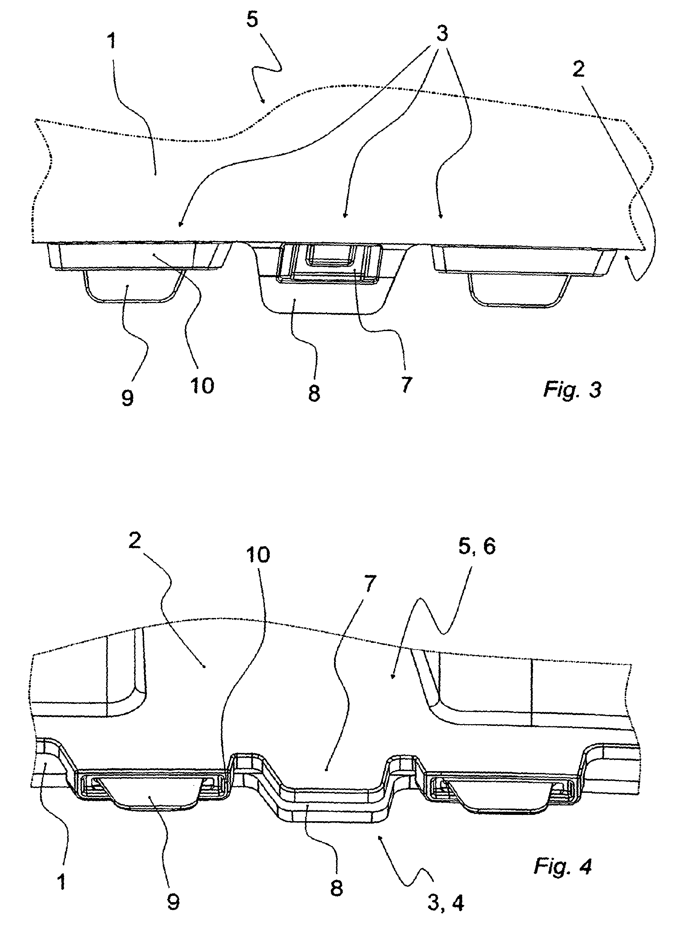

Die Figur 3 zeigt einen Detailausschnitt der Verkleidungsanordnung mit einem im Wesentlichen dünnwandigen Außenanbauteil 1 aus Kunststoff, einem die Struktur des Außenanbauteils 1 verstärkenden Innenteils 2, wobei das Außenanbauteil 1 und das Innenteil 2 an deren Randbereich 3, 4 jeweils mindestens einen Verbindungsbereich 5, 6 mit angeformten Verbindungsmitteln 7, 8, 9, 10 aufweisen, mittels derer das Außenanbauteil 1 und das Innenteil 2 miteinander verbunden sind. Ein erstes Verbindungsmittelpaar 7, 8 besteht aus einem Hakenelement 7 und einer dazu korrespondierenden Hakenelementaufnahme 8. Ein zweites, funktionell eigenständiges, Verbindungsmittelpaar 9, 10 besteht aus einer Ausformung 9 und einer dazu korrespondierenden Ausformungsaufnahme 10. Die Ausformungsaufnahme 10 ist so ausgebildet, dass im verbundenen Zustand von Außenanbauteil 1 und Innenteil 2 die Ausformung 9 von der Ausformungsaufnahme 10 zumindest bereichsweise umgriffen oder umschlossen ist. Die Verbindungsmittel 7, 8, 9, 10 sind so aufeinander abgestimmt, dass das Hakenelement 7 mit der Hakenelementaufnahme 8 verrastend verbunden ist, sobald die die Ausformung 9 umgreifende oder umschließende Ausformungsaufnahme 10 an dem Bauteil anliegt, an dem die Ausformung 9 angeordnet ist, wobei die Ausformung 9 in diesem Ausführungsbeispiel an dem Außenanbauteil 1 angeordnet ist.

Die Figur 4 zeigt den bereits in Figur 3 dargestellten Detailbereich der erfindungsgemäßen Verkleidungsanordnung, wobei hier die in Figur 3 verdeckte Unterseite dargestellt ist. Die Ausformung 9 weist eine zum freien Ende 15 hin verjüngende Wandstärke und einen zum freien Ende 15 hin verjüngenden Querschnitt auf. Alternativ ist denkbar, dass die Ausformung 9 eine zylinderförmig oder pyramidenförmig oder kegelförmig oder rein rechteckige Ausbildung aufweist. In diesem Fall kann insbesondere bei einer zylinder- oder pyramiden- oder kegelförmigen Ausbildung zum freien Ende 15 hin ein sich verjüngender Durchmesser vorhanden sein.

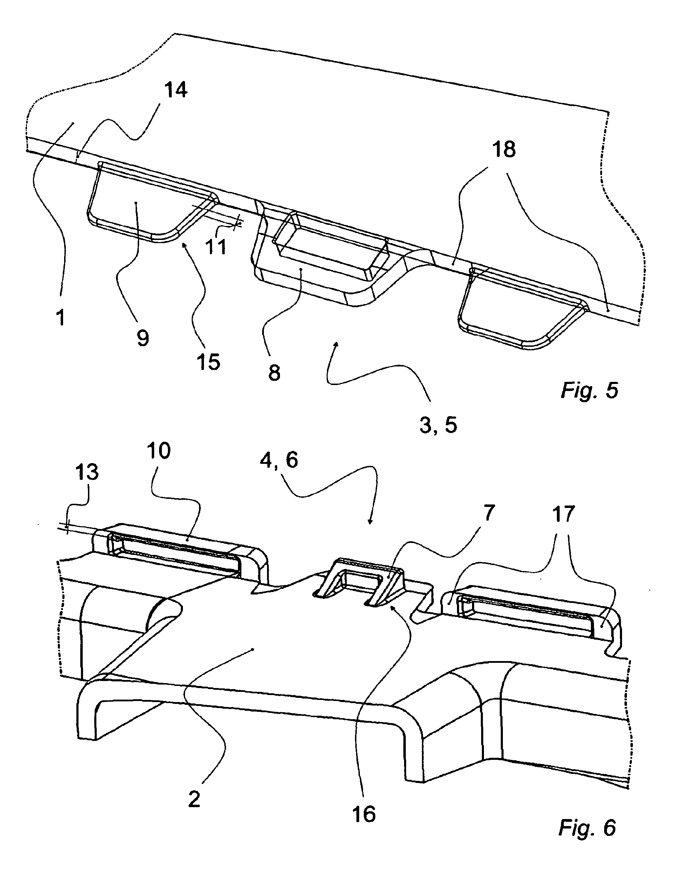

Die Figur 5 zeigt das Außenanbauteil 1 mit einer Ausformung 9 und einer Hakenelementaufnahme 8. Sobald das hier nicht näher dargestellte Hakenelement 7 des Innenteils 2 mit der Hakenelementaufnahme 8 verrastend verbunden ist, liegt die hier ebenfalls nicht näher dargestellte Ausformungsaufnahme 10 des Innenteils 2 an dem Außenanbauteil 1 im Bereich der Kontaktflächen 17, 18 an.

Die Figur 6 zeigt das Innenteil 2 mit einer Ausformungsaufnahme 10 und einem Hakenelement 7. Das Hakenelement 7 weist ein Aufgleitelement 16 auf. Die in Figur 5 näher dargestellte Wandstärke 11 der Ausformung 9 und die hier dargestellte Wandstärke 13 des die Ausformung 9 umgreifenden oder umschließenden Bereiches 13 der Ausformungsaufnahme 10 sind so aufeinander abgestimmt, dass die Wandstärken 11, 13 im verbundenen Zustand zusammengenommen maximal so groß sind wie die Wandstärke 14 (vergleiche Figur 5) des Außenanbauteils 1 im Bereich der Verbindungsmittel 7, 8, 9, 10.

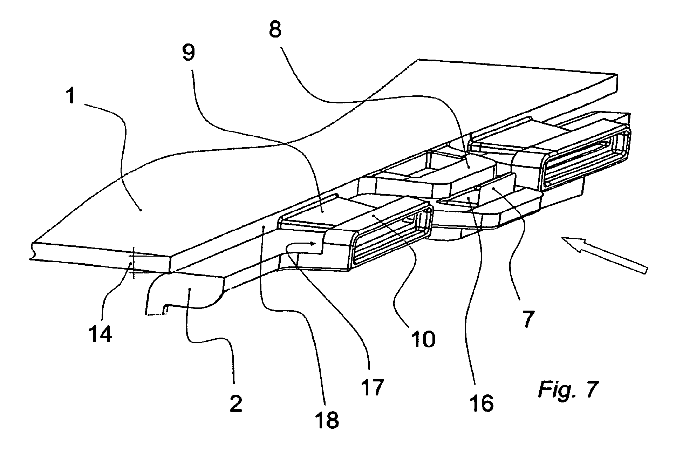

Die Figur 7 zeigt eine erfindungsgemäße Verkleidungsanordnung mit einem im Wesentlichen dünnwandigen Außenanbauteil 1 aus Kunststoff und einem die Struktur des Außenanbauteils 1 verstärkenden Innenteil 2, wobei das Außenanbauteil 1 und das Innenteil 2 an ihrem Randbereich 3, 4 jeweils mindestens einen Verbindungsbereich 5, 6 mit angeformten Verbindungsmitteln 7, 8, 9, 10 aufweisen, mittels derer das Au βenanbauteil 1 und das Innenteil 2 miteinander verbindbar sind. Der in Figur 7 dargestellte Pfeil gibt die Montagerichtung des Innenteils 2 an, wobei in diesem Ausführungsbeispiel das Innenteil 2 auf das Außenanbauteil 1 aufgeschoben wird. Die Verkleidungsanordnung weist ein erstes Verbindungsmittelpaar 7, 8 auf bestehend aus einem Hakenelement 7, welches an dem Innenteil 2 angeformt ist und einer dazu korrespondierenden Hakenelementaufnahme 8, welche an dem Außenanbauteil 2 angeformt ist. Ein zweites, funktionell eigenständiges Verbindungsmittelpaar 9, 10 ist vorgesehen und besteht aus einer Ausformung 9, welche an dem Außenanbauteil 2 angeformt ist, und einer dazu korrespondieren Ausformungsaufnahme 10, welche an dem Innenteil 2 angeformt ist. Die Ausformungsaufnahme 10 ist so ausgebildet, dass im verbundenen Zustand von Außenanbauteil 1 und Innenteil 2 die Ausformung 9 von der Ausformungsaufnahme 10 zumindest bereichsweise umgriffen oder umschlossen ist. Die Verbindungsmittel 7, 8, 9, 10 sind so aufeinander abgestimmt, dass das Hakenelement 7 mit der Hakenelementaufnahme 8 verrastend verbindbar ist, sobald die die Ausformung 9 umgreifende oder umschließende Ausformungsaufnahme 10 an dem Bauteil anliegt, an dem die Ausformung 9 angeordnet ist, in diesem Fall also an dem Außenanbauteil 1. Die Wandstärke 11 der Ausformung 9 und die Wandstärke 13 des die Ausformung 9 umgreifenden oder umschließenden Bereichs der Ausformungsaufnahme 10 sind so aufeinander abgestimmt, dass die Wandstärken 11, 13 im verbundenen Zustand zusammengenommen maximal so groß sind, wie die Wandstärke 14 des Außenanbauteils 1 im Bereich der Verbindungsmittel 7, 8, 9, 10. Somit ist erreicht, dass die Ausformungsaufnahme 10 nicht über das Au βenanbauteil 1 vorsteht und im Einbauzustand der Verkleidungsanordnung am Fahrzeug von außen sichtbar ist. Um das Aufschieben des Innenteils zu erleichtern, weisen die Ausformungen 9 eine sich zum freien Ende 15 hin verjüngende Wandstärke auf. Die Ausformungsaufnahme 10 und die Hakenelementaufnahme 8 sind laschenförmig ausgebildet. Das Hakenelement 7 weist ein Aufgleitelement 16 auf, welches bei der Montage dafür sorgt, dass die Hakenelementaufnahme 8 und/oder das Hakenelement 7 gegeneinander elastisch verdrückt werden, was ebenfalls die Montage erleichtert. Hierfür sind die Ausformungen 9 entsprechend so lang ausgebildet, dass der Aufgleitvorgang von Hakenelement 7 und Hakenelementaufnahme 8 dann beginnt, wenn die Ausformungen 9 bereits in die Ausformungsaufnahmen 10 eingreifen.

## Patentansprüche

1. Verkleidungsanordnung, insbesondere für ein Kraftfahrzeug, mit
- einem im Wesentlichen dünnwandigen Außenanbauteil (1) aus Kunststoff
- einem die Struktur des Außenanbauteils (1) verstärkenden Innenteil (2)
- wobei das Außenanbauteil (1) und das Innenteil (2) an ihrem Randbereich (3, 4) jeweils mindestens einen Verbindungsbereich (5, 6) mit, vorzugsweise angeformten, Verbindungsmitteln (7, 8, 9, 10) aufweisen, mittels derer das Außenanbauteil (1) und das Innenteil (2) miteinander verbindbar sind, wobei
- mindestens ein erstes Verbindungsmittelpaar (7,8) vorgesehen ist bestehend aus einem Hakenelement (7) und einer dazu korrespondierenden Hakenelementaufnahme (8) und, dass
- außerdem mindestens ein zweites, funktionell eigenständiges Verbindungsmittelpaar (9, 10) vorgesehen ist bestehend aus einer Ausformung (9) und einer dazu korrespondierenden Ausformungsaufnahme (10),
- wobei die Ausformungsaufnahme (10) so ausgebildet ist, dass im verbundenen Zustand von Außenanbauteil (1) und Innenteil (2) die Ausformung (9) von der Ausformungsaufnahme (10) zumindest bereichsweise umgriffen oder umschlossen ist und,dass
- die Verbindungsmittel (7, 8, 9, 10) so aufeinander abgestimmt sind, dass das Hakenelement (7) mit der Hakenelementaufnahme (8) verrastend verbindbar ist, sobald die, die Ausformung (9) umgreifende oder umschließende Ausformungsaufnahme (10) an dem Bauteil anliegt, an dem die Ausformung (9) angeordnet ist,
**dadurch gekennzeichnet, dass**
die Wandstärke (11) der Ausformung (9) und die Wandstärke des die Ausformung (9) umgreifenden oder umschließenden Bereiches (13) der Ausformungsaufnahme (10) so aufeinander abgestimmt sind, dass die Wandstärken (11, 13) im verbundenen Zustand zusammengenommen maximal so groß sind wie die Wandstärke (14) des Außenanbauteils (1) im Bereich der Verbindungsmittel (7, 8, 9, 10).

2. Verkleidungsanordnung nach Anspruch 1, **dadurch gekennzeichnet, dass** die Ausformung (9) an dem Außenanbauteil (1) und die Ausformungsaufnahme (10) an dem Innenteil (2) angeordnet, vorzugsweise einstückig angeformt, ist.

3. Verkleidungsanordnung nach einem der vorstehenden Ansprüche, **dadurch gekennzeichnet, dass** die Ausformung (9) zylinderförmig oder pyramidenförmig oder kegelförmig oder rechteckig ausgebildet ist.

4. Verkleidungsanordnung nach einem der vorstehenden Ansprüche, **dadurch gekennzeichnet, dass** die Ausformung (9) eine zum freien Ende (15) hin verjüngende Wandstärke oder einen zum freien Ende (15) hin verjüngenden Durchmesser oder einen zum freien Ende (15) hin verjüngenden Querschnitt aufweist.

5. Verkleidungsanordnung nach einem der vorstehenden Ansprüche, **dadurch gekennzeichnet, dass** die Ausformungsaufnahme (10) und/oder Hakenelementaufnahme (8) bügelförmig oder bogenförmig oder buchsenförmig oder laschenförmig oder L-förmig oder C-förmig ausgebildet ist.

6. Verkleidungsanordnung nach einem der vorstehenden Ansprüche, **dadurch gekennzeichnet, dass** mindestens zwei zweite Verbindungsmittelpaare (9, 10) vorgesehenen sind, wobei das erste Verbindungsmittelpaar (7, 8) zwischen den zweiten Verbindungsmittelpaaren (9, 10) angeordnet ist.

7. Verkleidungsanordnung nach einem der vorstehenden Ansprüche, **dadurch gekennzeichnet, dass** das Hakenelement (7) ein Aufgleitelement (16) aufweist.

8. Verkleidungsanordnung nach einem der vorstehenden Ansprüche, **dadurch gekennzeichnet, dass** das Außenanbauteil (1) aus einem thermoplastischen Kunststoff oder einer Kunststofflegierung besteht, vorzugsweise aus Polypropylen mit Ethylen-Propylen-Dien-Kautschuk und Beimengungen von Talkum.

9. Verkleidungsanordnung nach einem der vorstehenden Ansprüche, **dadurch gekennzeichnet, dass** das Außenanbauteil (1) eine Wandstärke im Bereich von 2,0 mm bis 4,0 mm, vorzugsweise von 2,5 mm bis 3,5 mm, bevorzugt von 2,8 mm bis 3,2 mm aufweist.

10. Verkleidungsanordnung nach einem der vorstehenden Ansprüche, **dadurch gekennzeichnet, dass** das Außenanbauteil (1) eine Stoßfängerverkleidung oder eine Kotflügelverkleidung ist.

11. Kraftfahrzeug mit einer Verkleidungsanordnung nach einem der Ansprüche 1 bis 10.

## Claims

1. Cladding assembly, in particular for a motor vehicle, with
- a substantially thin-walled outer add-on part (1) made of plastic,
- an inner part (2) reinforcing the structure of the outer add-on part (1),
- wherein the outer add-on part (1) and the inner part (2) each have, at the edge region (3, 4) thereof, at least one connecting region (5, 6) with, preferably integrally formed, connecting means (7, 8, 9, 10), by means of which the outer add-on part (1) and the inner part (2) are connectable to each other, wherein
- at least one first pair of connecting means (7, 8) consisting of a hook element (7) and a hook element receptacle (8) corresponding thereto is provided, and in that
- in addition at least one second, functionally independent pair of connecting means (9, 10) consisting of a formation (9) and of a formation receptacle (10) corresponding thereto is provided,
- wherein the formation receptacle (10) is designed in such a manner that, in the connected state of the outer add-on part (1) and inner part (2), the formation (9) is engaged around or enclosed at least in regions by the formation receptacle (10), and in that
- the connecting means (7, 8, 9, 10) are coordinated with each other in such a manner that the hook element (7) is connectable to the hook element receptacle (8) in a latching manner as soon as the formation receptacle (10) engaging around or enclosing the formation (9) bears against the component on which the formation (9) is arranged,
**characterized in that** the wall thickness (11) of the formation (9) and the wall thickness of that region (13) of the formation receptacle (10) which engages around or surrounds the formation (9) are matched to each other in such a manner that, taken together in the connected state, the wall thicknesses (11, 13) are at maximum the same size as the wall thickness (14) of the outer add-on part (1) in the region of the connecting means (7, 8, 9, 10).

2. Cladding assembly according to Claim 1, **characterized in that** the formation (9) is arranged, preferably integrally formed as a single piece, on the outer add-on part (1) and the formation receptacle (10) is arranged, preferably integrally formed as a single piece, on the inner part (2).

3. Cladding assembly according to either of the preceding claims, **characterized in that** the formation (9) is of cylindrical or pyramidal or conical or rectangular design.

4. Cladding assembly according to one of the preceding claims, **characterized in that** the formation (9) has a wall thickness tapering towards the free end (15) or a diameter tapering towards the free end (15) or a cross section tapering towards the free end (15).

5. Cladding assembly according to one of the preceding claims, **characterized in that** the formation receptacle (10) and/or the hook element receptacle (8) are/is of bow-shaped or arc-shaped or sleeve-shaped or bracket-shaped or L-shaped or C-shaped design.

6. Cladding assembly according to one of the preceding claims, **characterized in that** at least two second pairs of connecting means (9, 10) are provided, wherein the first pair of connecting means (7, 8) is arranged between the second pairs of connecting means (9, 10).

7. Cladding assembly according to one of the preceding claims, **characterized in that** the hook element (7) has a slide-on element (16).

8. Cladding assembly according to one of the preceding claims, **characterized in that** the outer add-on part (1) is composed of a thermoplastic or a plastics alloy, preferably of polypropylene with ethylene-propylene-diene rubber and admixtures of talc.

9. Cladding assembly according to one of the preceding claims, **characterized in that** the outer add-on part (1) has a wall thickness within the range of 2.0 mm to 4.0 mm, preferably of 2.5 mm to 3.5 mm, preferably of 2.8 mm to 3.2 mm.

10. Cladding assembly according to one of the preceding claims, **characterized in that** the outer add-on part (1) is a bumper cladding or a wing cladding.

11. Motor vehicle with a cladding assembly according to one of Claims 1 to 10.

## Revendications

1. Agencement d'habillage, en particulier pour un véhicule automobile, comprenant :
- un composant rapporté extérieur (1) essentiellement à paroi mince en plastique,
- une partie intérieure (2) renforçant la structure du composant rapporté extérieur (1)
- le composant rapporté extérieur (1) et la partie intérieure (2) présentant au niveau de leur région de bord (3, 4) à chaque fois au moins une région de liaison (5, 6) avec des moyens de liaison (7, 8, 9, 10) de préférence façonnés, au moyen desquels le composant rapporté extérieur (1) et la partie intérieure (2) peuvent être connectés l'un à l'autre,
- au moins une première paire de moyens de liaison (7, 8) étant prévue, constituée d'un élément de crochet (7) et d'un logement correspondant (8) pour l'élément de crochet, et
- au moins en outre une deuxième paire de moyens de liaison fonctionnellement autonome (9, 10) étant prévue, constituée d'une formation (9) et d'un logement de formation correspondant (10),
- le logement de formation (10) étant réalisé de telle sorte que dans l'état connecté du composant rapporté extérieur (1) et de la partie intérieure (2), la formation (9) soit saisie sur son pourtour ou entourée au moins en partie par le logement de formation (10), et
- les moyens de liaison (7, 8, 9, 10) étant adaptés les uns aux autres de telle sorte que l'élément de crochet (7) puisse être connecté par encliquetage au logement (8) pour l'élément de crochet dès que le logement de formation (10) saisissant sur son pourtour ou entourant la formation (9) s'applique contre le composant sur lequel est disposée la formation (9),
**caractérisé en ce que** l'épaisseur de paroi (11) de la formation (9) et l'épaisseur de paroi de la région (13) du logement de formation (10) saisissant sur son pourtour ou entourant la formation (9) sont adaptées l'une à l'autre de telle sorte que les épaisseurs de paroi (11, 13) prises ensemble dans l'état connecté soient au maximum aussi grandes que l'épaisseur de paroi (14) du composant rapporté extérieur (1) dans la région des moyens de liaison (7, 8, 9, 10).

2. Agencement d'habillage selon la revendication 1, **caractérisé en ce que** la formation (9) est disposée sur le composant rapporté extérieur (1) et le logement de formation (10) est disposé sur la partie intérieure (2), de préférence de manière façonnée d'une seule pièce.

3. Agencement d'habillage selon l'une quelconque des revendications précédentes, **caractérisé en ce que** la formation (9) est réalisée sous forme cylindrique ou pyramidale ou conique ou rectangulaire.

4. Agencement d'habillage selon l'une quelconque des revendications précédentes, **caractérisé en ce que** la formation (9) présente une épaisseur de paroi diminuant vers l'extrémité libre (15) ou un diamètre diminuant vers l'extrémité libre (15) ou une section transversale diminuant vers l'extrémité libre (15).

5. Agencement d'habillage selon l'une quelconque des revendications précédentes, **caractérisé en ce que** le logement de formation (10) et/ou le logement (8) pour l'élément de crochet sont réalisés sous forme d'étrier ou sous forme courbe ou sous forme de douille ou sous forme de patte ou en forme de L ou en forme de C.

6. Agencement d'habillage selon l'une quelconque des revendications précédentes, **caractérisé en ce qu'**au moins deux deuxièmes paires de moyens de liaison (9, 10) sont prévues, la première paire de moyens de liaison (7, 8) étant disposée entre les deuxièmes paires de moyens de liaison (9, 10).

7. Agencement d'habillage selon l'une quelconque des revendications précédentes, **caractérisé en ce que** l'élément de crochet (7) présente un élément de glissement (16).

8. Agencement d'habillage selon l'une quelconque des revendications précédentes, **caractérisé en ce que** le composant rapporté extérieur (1) se compose d'un plastique thermoplastique ou d'un alliage de plastique, de préférence de polypropylène avec du caoutchouc éthylène-propylène-diène et de mélanges de talc.

9. Agencement d'habillage selon l'une quelconque des revendications précédentes, **caractérisé en ce que** le composant rapporté extérieur (1) présente une épaisseur de paroi dans la plage de 2,0 mm à 4,0 mm, de préférence de 2,5 mm à 3,5 mm, de préférence de 2,8 mm à 3,2 mm.

10. Agencement d'habillage selon l'une quelconque des revendications précédentes, **caractérisé en ce que** le composant rapporté extérieur (1) est un habillage de pare-chocs ou un habillage de garde-boue.

11. Véhicule automobile comprenant un agencement d'habillage selon l'une quelconque des revendications 1 à 10.
